# EUROPEAN PATENT SPECIFICATION

(11) **EP 2 280 800 B1**
(45) Date of publication and mention of the grant of the patent: **30.05.2018**
(21) Application number: 09724246.5
(22) Date of filing: 25.03.2009
(51) Int. Cl.: B23K 11/00, B23K 11/25

(54) **WELDING HEAD FOR A MACHINE FOR THE FORMATION OF METAL MESH, RELATIVE WELDING METHOD AND MACHINE FOR THE FORMATION OF METAL MESH USING SAID WELDING HEAD**
SCHWEISSKOPF FÜR EINE MASCHINE ZUR BILDUNG EINES METALLGITTERS, ENTSPRECHENDES SCHWEISSVERFAHREN UND MASCHINE ZUR BILDUNG DES METALLGITTERS UNTER VERWENDUNG DES SCHWEISSKOPFS
TÊTE DE SOUDAGE POUR UNE MACHINE DE FORMATION D'UN TREILLIS MÉTALLIQUE, PROCÉDÉ DE SOUDAGE ASSOCIÉ ET MACHINE DE FORMATION D'UN TREILLIS MÉTALLIQUE UTILISANT LADITE TÊTE DE SOUDAGE

(30) Priority: 28.03.2008 IT UD20080067
(43) Date of publication of application: 09.02.2011
(73) Proprietor: M.E.P. Macchine Elettroniche Piegatrici S.p.A., 33010 Reana del Rojale (UD) (IT)
(72) Inventor: TABOGA, Ermanno, 33030 Buia (IT)
(74) Representative: Petraz, Davide Luigi
(86) International application number: PCT/EP2009/053503
(87) International publication number: WO 2009/118334

(56) References cited:
- WO-A1-2009/015401
- BE-A1- 830 194
- US-A- 4 609 802
- US-A- 5 134 269

## Description

### FIELD OF THE INVENTION

The present invention concerns a welding head used in a machine for the production of a metal mesh, the relative production method and the machine provided with the welding head. The invention is applied preferentially, but not exclusively, to create electro-welded metal meshes used as reinforcement for structures of reinforced concrete. For this reason, in the following description, specific reference will be made to this application, although the invention can also be used for the formation of meshes of other types.

### BACKGROUND OF THE INVENTION

Different machines are known for the production of electro-welded metal meshes made up of a plurality of longitudinal metal wires, or round pieces, separated from each other (see BE-A-830 194). Corresponding transverse metal wires or round pieces are welded perpendicularly on the longitudinal wires, according to pre-defined interaxis.

These machines generally comprise a plurality of welding heads, at least one for every longitudinal wire, and a feed unit to feed the transverse wires.

Each welding head comprises at least a feed unit to feed the longitudinal wires and a welding unit, and is selectively movable parallel to the direction of the feed of the transverse wires, in order to regulate the positioning distance of the longitudinal wires.

In particular, the welding unit comprises two electrodes, able to be selectively moved closer to each other so as to be moved between a first feed position, in which at least one electrode is distanced from the two wires in order to allow the free positioning thereof, and a second welding position in which both the electrodes contact and grip the two wires in correspondence with one of their join segments. In the second position the two electrodes apply different tensions determining the welding of the two wires.

The functioning of the machines provides that a transverse wire, in some cases several transverse wires simultaneously, is fed and disposed in an attachment position in which it is joined to the longitudinal wires by means of the welding unit.

Subsequently the longitudinal wires are simultaneously fed forward by a pitch equivalent to the interaxis between the transverse wires, so that a new transverse wire can be fed and disposed in the attachment position.

One of the main limits of such machines is the speed of movement of the electrodes between the first and the second position.

This speed is normally kept substantially constant and suitably high, both to limit costs and bulk, and also to reduce to a minimum the downtimes of the machine due to the welding steps.

In this way, the action of the electrodes on the metal wires also determines a beating effect on the wires.

This beating effect causes, on the one hand, a rapid wear of the electrodes which are normally made of ductile material, such as copper or similar, and, on the other hand, a high mechanical stress on the frame of the machine, considering that the machine can comprise tens of different welding heads acting simultaneously.

Another limit of known machines is the difficulty of guaranteeing a correct and uniform positioning of the longitudinal wires, both between each other and also with respect to the transverse wires.

To overcome this limit, it is known to provide complex and voluminous alignment members to align the wires and to coordinate the welding heads.

Furthermore, there is a growing need to create electro-welded metal meshes in which the interaxes between the longitudinal wires and the transverse wires are reduced to a minimum.

Purpose of the present invention is to achieve a welding head, and to perfect a welding method, for a machine for the formation of electro-welded metal meshes, which solves the disadvantages of the wear of the electrodes, the mechanical stress of the frame, the alignment of the wires and the bulk, without compromising the normal productivity and the quality of work of known machines.

The Applicant has devised, tested and embodied the present invention to overcome the shortcomings of the state of the art and to obtain these and other purposes and advantages.

### SUMMARY OF THE INVENTION

The present invention is set forth and characterized in the independent claims 1 and 17, while the dependent claims describe other characteristics of the invention or variants to the main inventive idea.

In accordance with the above purpose, a welding head according to the present invention is used in a machine for the formation of metal mesh, and comprises at least a first feed unit able to feed step-wise a plurality of longitudinal wires of the metal mesh, and a welding unit by means of which the longitudinal wires are attached by welding, with a pre-defined or pre-definable pitch, to corresponding transverse wires of the metal mesh.

The welding unit comprises two electrodes, selectively movable between a first feed position, in which at least a first electrode is distant from the two wires to be welded, and a second welding position in which both the electrodes contact and grip the two wires to be welded and apply different tensions determining the welding of the two wires.

According to a characteristic feature of the present invention, the welding head comprises at least a movement member, which is of the fluid-dynamic type, operatively associated at least with the first electrode in order to move it between the first and the second position, first sensor means associated with the movement member and configured to detect the position of the first electrode with respect to the two wires, and/or second sensor means associated with the movement member and configured to detect the working pressure of the first electrode.

In this way, by commanding the movement member in a coordinated way according to the data detected by the first and/or by the second sensor means, it is possible to set a first speed, relatively high, of the electrode when it approaches the wires, and subsequently, according to the position detected of the electrode and to the sizes of the wires, to set a second relatively slower approach speed, until it contacts the wires. The contact of the electrode with the wires is detected by the second sensor means which detects an increase in pressure, stopping the movement member when a pre-determined threshold is reached, and then applying the welding tension.

Therefore, in substantially the same operating time as known welding heads, the electrode is first moved closer at high speed and then slowed down until it contacts and rests on the wires, thus avoiding the disadvantage deriving from the beating of the electrodes against the wires.

With the present invention the wear on the electrodes, and therefore their frequency of maintenance, is considerably reduced; the mechanical stress on the frame of the machine is also reduced, thus allowing to provide simpler and less costly machines.

In a variant, the first and second sensor means are integrated in a single body in the movement member, so that the bulk relating to the welding head are reduced with respect to the state of the art.

According to a variant, the first sensor means comprise at least a linear transducer device of the electro-magnetic type, which comprises at least a mobile magnetic element together with the electrode and able to emit a relative magnetic field, and an electronic measuring element, fixed with respect to the electrode, and able to detect the intensity of the magnetic field emitted by the magnetic element in order to identify the position thereof, according to the value detected.

According to another variant, the second sensor means comprises at least a first pressure switch able to detect the pressure of the actuating or delivery fluid of the movement member, and a second pressure switch able to detect the pressure of the fluid returning from the movement member.

In this way, by measuring the difference in potential between the pressure of the fluid delivered and the pressure of the fluid returning, and by comparing it with a limit variation, it is possible to detect the possible stopping of the electrode.

According to another variant, the first sensor means and the second sensor means are configured and disposed in the movement member in such a way as to reduce to a minimum the bulk of the movement member, at least in width.

In this way it is possible to reduce to a minimum the distance between two welding heads of the same machine, and to reduce to a minimum the distance between two adjacent longitudinal wires of the same electro-welded mesh as well.

According to another variant, the welding head comprises a positioning unit, in which at least two positioning guides are provided, disposed substantially aligned and staggered with each other with respect to an axis of feed of the longitudinal wire.

The two positioning guides are disposed, respectively, one above and one below the longitudinal wire and have a "V" shaped guide seating open toward the axis of feed, in such a way that the reciprocal action of the two guides determines a substantial centering of the longitudinal wire toward the axis of feed.

Advantageously, an elastic member is associated with at least one positioning guide, which allows to auto-center the relative guide seating with respect to the longitudinal wire being fed, and to push it toward the axis of feed.

This variant allows to center the relative longitudinal wire with respect to the axis of feed, in a simple and effective way and with the minimum possible bulk in width, thus facilitating welding operations.

According to another variant, the first feed unit comprises at least a pair of feed rollers able to cooperate from opposite sides on the longitudinal wire in order to feed it toward the welding unit, and a header member able to selectively cooperate, at least in an initial step of the cycle to form the mesh, with a leading end of the longitudinal wire. In this way, all the longitudinal wires provided on each welding head are headed simultaneously, avoiding a staggered positioning between the various longitudinal wires, with respect to the transverse wires.

According to a further variant, at least one roller of the pair of feed rollers is selectively mobile toward the longitudinal wire to be fed, in such a way as to allow to regulate the distance between the two rollers, depending on the diameter of the wire. Advantageously, the movement of this mobile roller is carried out using a cylinder with an oval chamber, in order to reduce to a minimum the lateral bulk of the feed unit.

According to another variant, in which the machine for the formation of metal mesh comprises a frame on which a plurality of welding heads are mounted, each welding head also comprises sliding means, translation means and stopping means, which allow to translate the welding head laterally and independently with respect to the frame of the machine, to then to clamp it in a desired position in relation to the pitch of the longitudinal wires.

In this way, it is possible to vary as desired, and in a guided and controlled manner, the reciprocal distance between the adjacent welding heads, and therefore of the longitudinal wires of the metal mesh.

### BRIEF DESCRIPTION OF THE DRAWINGS

These and other characteristics of the present invention will become apparent from the following description of a preferential form of embodiment, given as a non-restrictive example with reference to the attached drawings wherein:

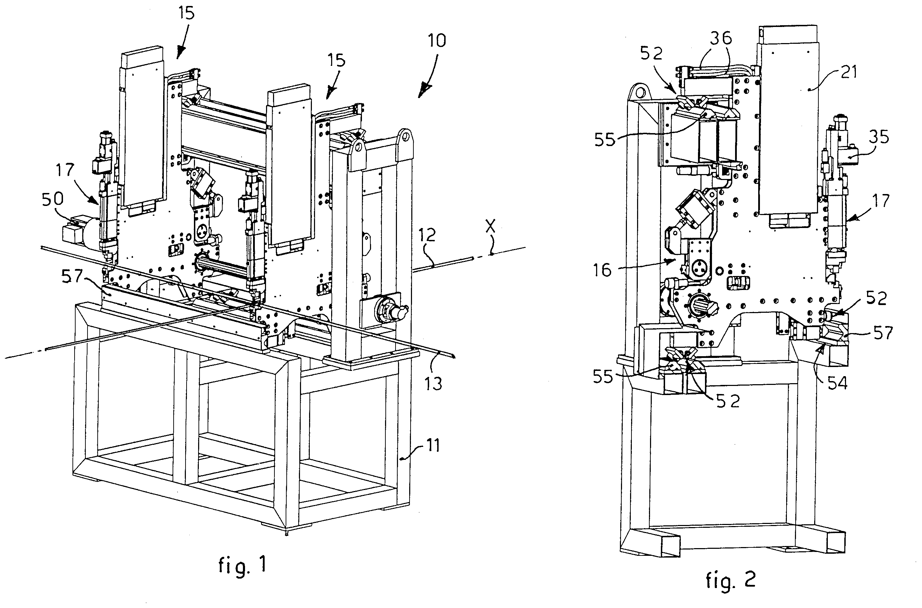

- - fig. 1: is a three-dimensional view of the machine to make a metal mesh provided with two welding heads according to the present invention;
- - fig. 2: is a three-dimensional sectioned view of the machine in fig . 1;

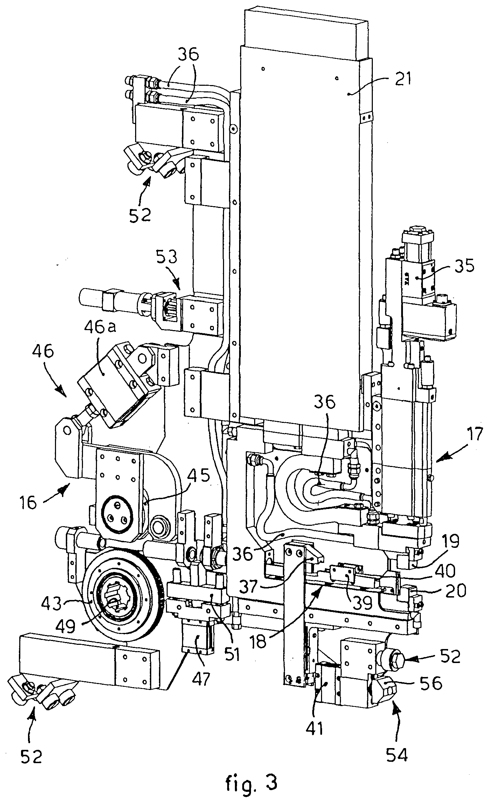

- - fig. 3: is a three-dimensional view of a welding head according to the present invention;

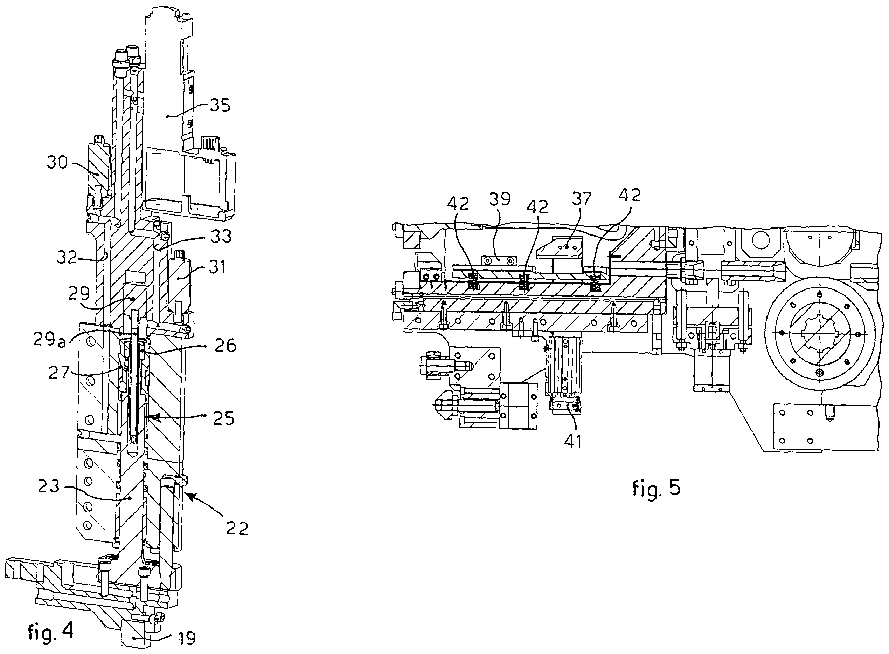

- - fig. 4: shows an enlarged and sectioned detail of the welding head in fig. 3;
- - fig. 5: shows an enlarged section of the welding head in fig. 3.

### DETAILED DESCRIPTION OF A PREFERENTIAL FORM OF EMBODIMENT

With reference to the attached drawings, the number 10 denotes in its entirety a machine for the formation of electro-welded mesh according to the present invention.

In this case, the electro-welded meshes formed with the machine 10 comprise a plurality of longitudinal metal wires 12 distanced from each other and welded to corresponding transverse metal wires 13, also distanced by a predefined interaxis.

The machine 10 substantially comprises a frame 11, a plurality of welding heads 15, in the simplified case shown here as an example only, two, mounted sliding on the frame 11, and a transverse feed unit, not shown, able to feed the transverse wires 13, in order to dispose them in cooperation with the welding heads 15.

Each welding head 15 comprises at least a feed unit 16 to feed the longitudinal wires 12, a positioning unit 18, able to maintain the longitudinal wires 12 substantially aligned with an axis of feed X, and a welding unit 17.

Each welding head 15 is selectively movable with respect to the frame 11, in an independent way, in a direction substantially parallel to the direction of feed of the transverse wires 13, so as to regulate the positioning distance of the longitudinal wires 12.

The welding unit 17 is disposed in correspondence with the join zone between the longitudinal wires 12 and the relative transverse wire 13.

The welding unit 17 comprises a first upper electrode 19 and a second lower electrode 20 which, fed by a tension generator unit 21, apply different tensions on the wires 12 and 13, determining the welding thereof.

In particular the upper electrode 19 is selectively movable by means of a movement member 22, while the second electrode 20 is fixed and on this the transverse wire 13 and the longitudinal wire 12 are able to be positioned in their join position.

The movement member 22 is actuated fluid-dynamically and comprises at least a shaft 23, disposed substantially vertically, and to which the first electrode 19 is fixed.

In this way the first electrode 19 is selectively movable between a first feed position, in which it is raised and distanced from the second electrode 20 and allows the free feed of both the transverse wire 13 and the longitudinal wire 12, and a second welding position, in which it is near to the second electrode 20 and with this contacts the two wires 12 and 13. In this condition, the tension generator unit 21 feeds to the electrodes 19 and 20 the tensions that determine the welding of the two wires 12 and 13.

The movement member 22 also comprises, and integrated with it, a transducer device 25 to measure the position of the first electrode 19, and a pair of pressure switches, respectively first 30 and second 31, to measure the working pressure of the first electrode 19.

The transducer device 25 is of the linear type with electro-magnetic function and comprises at least a magnet 26 of an annular shape fixed axially to the shaft 23 by means of a jacket 27, and an electronic measuring element 29 mounted fixed inside the movement member 22, and having at least an oblong part 29a inserted axially through the magnet 26.

Both the magnet 26 and the electronic measuring element 29 have a reduced lateral bulk compared with the maximum lateral bulk of the movement member.

In this way, the magnet 26 emits a determinate magnetic field and moves with the shaft 23 when the first electrode 19 is moved between one and the other of its positions, while the electronic measuring element 29 detects at intervals the intensity of the magnetic field emitted by the magnet 26.

Depending on the intensity of the magnetic field detected, the electronic measuring element 29 recognizes the distance between it and the magnet 26, and therefore obtains the position of the first electrode 19 with respect to, for example, the second electrode 20.

The first pressure switch 30 and the second pressure switch 31 are mounted outside the movement member 22, respectively on a front edge and a rear edge, and both have a smaller lateral bulk than the maximum lateral bulk of the movement member 22.

The first pressure switch 30 is hydraulically connected to a delivery pipe 32 through which a fluid to move the shaft 23 flows. In particular, the fluid flows under pressure through the delivery pipe 32 when the first electrode 19 is commanded to be lowered to its second position.

The second pressure switch 31 is hydraulically connected to a return pipe 33 through which the fluid to move the shaft 23 flows. In particular, the fluid flows under pressure through the return pipe 33 when the first electrode 19 is commanded to be raised to its first position.

The feed of the movement fluid from and toward the shaft 23 is managed by an electro valve 35, electronically connected both to the transducer device 25 and also to the two pressure switches 30 and 31.

In this way, also depending on the diameters of the two wires 12 and 13, when the first electrode 19 is moved from the first to the second position, the movement occurs for at least a first segment with a first high speed.

The first high speed is maintained until the transducer device 25 detects that the position of the first electrode 19 is near to the two wires 12 and 13.

At this point the electro valve 35 determines a reduction in the flow rate of the fluid through the delivery pipe 32, causing a reduction in the speed of movement of the first electrode 19. The greater the reduction in the flow rate, the greater the reduction in speed.

At the moment when the first electrode 19 rests on the two wires 12 and 13, the two pressure switches 30 and 31 detect different pressures in the respective delivery pipe 32 and return pipe 33.

This difference in pressure, at the moment it exceeds a pre-defined limit, determines the stoppage, by the electro valve 35, of the feed of the movement fluid, and the activation of the tension generator unit 21, to carry out the welding.

In proximity to the different electric, mechanic and fluid-dynamic members of the welding unit 17 as described heretofore, a plurality of cooling pipes 36 are provided, able to limit the overheating of the parts.

The positioning unit 18 is disposed upstream of the welding unit 17 with respect to the direction of feed of the longitudinal wires 12.

The positioning unit 18 comprises a first positioning guide 37 and a second positioning guide 39 disposed substantially aligned and staggered with each other with respect to the axis of feed X of the longitudinal wire 12.

In particular, the first positioning guide 37 is disposed above the longitudinal wire 12, while the second positioning guide 39 is disposed below the longitudinal wire 12.

Each of the positioning guides 37 and 39 comprises a guide seating 40 conformed as a "V" and open toward the axis of feed X, so as to cooperate from opposite sides with the longitudinal wire 12 and to maintain it substantially centered toward the axis of feed X.

The first positioning guide 37 is selectively movable toward the second positioning guide 39, by means of a linear actuator 41, so that it can be selectively regulated depending on the diameter of the longitudinal wire 12.

The second positioning guide 39 is associated with a plurality of elastic springs 42 which carry out a normal thrust toward the first positioning guide 37, allowing to auto-center the relative guide seating 40 with respect to the longitudinal wire 12 fed, and to maintain the latter toward the axis of feed X.

The two positioning guides 37 and 39, the linear actuator 41 and the elastic springs 42 all have a smaller lateral bulk than the maximum lateral bulk of the movement member 22 of the welding unit 17.

The feed unit 16 is disposed upstream of the positioning unit 18, with respect to the direction of feed of the longitudinal wires 12.

The feed unit 16 substantially comprises: a pair of feed rollers 43 and 45, a compression mechanism 46 and a header device 47.

In particular, a first roller 43 of the pair is motorized by means of a grooved profile 49, common for all the feed units 16 of the welding heads 15, while a second roller 45 of the pair is mobile with respect to the first roller 43 and is mechanically connected to the compression mechanism 46, provided with a cylinder having an oval chamber 46a.

The grooved profile 49 is selectively made to rotate by means of a motor reducer 50.

The header device 47 substantially comprises a block 51 shaped in such a way as to substantially define an upside down T profile, able to be moved by actuation means of a known type from a first position in which it allows the passage of the relative longitudinal wire 12, to a second position in which it clamps the leading end of the relative longitudinal wire 12 in order to head it. In this way all the longitudinal wires 12 provided on each welding head 15 are simultaneously headed.

Each welding head 15 is also provided with sliding members 52, translation members 53 and a stopping element 54, which allow to translate laterally each welding head in an independent manner and then to clamp it in the desired position.

The sliding members 52 are associated respectively with the upper and lower parts of the welding head 15, and are able to cooperate in a known manner with corresponding sliding guides 53 associated with the frame 11, in such a way as to always maintain each welding head in position.

The translation members 53 in this case substantially comprise a rack type mechanism and allow the lateral sliding of each welding head 15 in order to be able to position each welding head 15 in the desired position.

The stopping element 54 is disposed substantially in correspondence with and under the positioning unit 18. The stopping element 54 comprises a block 56, having a substantially trapezoidal shape, able to be moved substantially in the direction of the axis X, in order to cooperate with a corresponding clamping bar 57, in such a way as to clamp the welding head 15 in the desired position.

It is clear, however, that modifications and/or additions of parts may be made to the machine 10 as described heretofore, without departing from the field and scope of the present invention.

It is also clear that, although the present invention has been described with reference to specific examples, a person of skill in the art shall certainly be able to achieve many other equivalent forms of machine 10, having the characteristics as set forth in the claims and hence all coming within the field of protection defined thereby.

## Claims

1. Welding head for the formation of a metal mesh comprising longitudinal wires (12) and transverse wires (13), comprising at least a feed unit (16) able to feed step-wise a plurality of said longitudinal wires (12), and a welding unit (17) by means of which said longitudinal wires (12) are welded to corresponding transverse wires (13), said welding unit (17) comprising at least two electrodes (19,20) selectively movable between a first feed position, in which at least a first electrode (19) is distant from said transverse (13) and longitudinal (12) wires, and a second welding position, in which both the electrodes (19,20) contact and grip said wires (12,13) and apply different tensions in order to weld said wires (12,13) to each other, wherein the welding head comprises at least a movement member (22) operatively associated at least with the first electrode (19) in order to move it between said first and said second position, and wherein said movement member (22) is of the fluid-dynamic type, **characterized in that** the welding head further comprises a first position sensor (25) associated with said movement member (22) and configured to detect the position of the first electrode (19) with respect to the two wires (12,13) and to cause a reduction of the speed of movement of said first electrode (19), by means of a reduction of a flow rate of the fluid through a delivery pipe (32) managed by an electro-valve (35), when said first electrode (19) is in a position near to said wires (12, 13), and a second and a third pressure sensors (30,31) associated with the movement organ (22), and configured to detect the working pressure of the first electrode (19) when the first electrode (19) contacts said wires (12, 13) and to cause the stoppage, by said electro-valve (35), which is electronically connected both to the first position sensor (25) and also to the second and third pressure sensors (30, 31), of the movement member (22) when a pre-determined threshold of pressure is reached, and to cause the activation of a tension generator unit (21) to carry out the welding.

2. Welding head as in claim 1, **characterized in that** said first sensor means comprises at least linear transduction means (25) of the electro-magnetic type having at least a magnetic element (26) mobile with the first electrode, able to emit a relative magnetic field.

3. Welding head as in claim 2, **characterized in that** said transduction means (25) comprises electronic measuring means (29) fixed with respect to said first electrode (19), able to detect the intensity of the magnetic field of said magnetic element (26).

4. Welding head as in claim 1, **characterized in that** said second pressure sensor comprises at least a first pressure switch (30) able to detect the pressure in delivery of a fluid that actuates the movement member (22) and third pressure sensor means comprises at least a second pressure switch (31) able to detect the pressure of said fluid returning from the movement member (22).

5. Welding head as in claim 1, **characterized in that** said first position sensor (25) and said second and third pressure sensors (30,31) are integrated in a single body with said movement member (22).

6. Welding head as in claim 1, **characterized in that** it comprises a positioning and centering unit (18) of the longitudinal wire (12) with respect to the axis of feed (X) of the longitudinal wire (12).

7. Welding head as in claim 6, **characterized in that** said positioning unit (18) comprises at least two positioning guides (37,39), substantially aligned and staggered with each other with respect to the axis of feed of the longitudinal wire (12).

8. Welding head as in claim 7, **characterized in that**, in use, said at least two positioning guides (37,39) are disposed one above and one below the longitudinal wire (12).

9. Welding head as in claim 7, **characterized in that** said at least two positioning guides (37,39) have a guide seating (40) conformed as a "V", open toward the axis of feed (X).

10. Welding head as in claim 7, **characterized in that** it comprises elastic means (42) associated with at least one of the said positioning guides (39), able to center the relative guide seating (40) of the positioning guide (39) with respect to the longitudinal wire (12) fed.

11. Welding head as in claim 1, **characterized in that** said feed unit (16) comprises at least a pair of feed rollers (43,45) able to cooperate from opposite sides on the longitudinal wire (12) in order to feed it toward the welding unit (17).

12. Welding head as in claim 1, **characterized in that** it comprises header means (47) able to cooperate selectively with a leading end of the relative longitudinal wire (12) in order to head it.

13. Welding head as in claim 11, **characterized in that** at least a roller (45) of said pair of feed rollers (43,45) is selectively movable toward the longitudinal wire (12) to be fed, in order to allow the distance of the two rollers (43,45) to be regulated according to the diameter of the longitudinal wire (12).

14. Welding head as in claim 13, **characterized in that** the movement of the mobile roller (45) is carried out using a cylinder with an oval chamber (46a).

15. Welding head as in claim 1, **characterized in that** it comprises sliding means (52) and translation means (53), able to translate said welding head laterally and in an independent manner with respect to a support frame of said welding head.

16. Welding head as in claim 15, **characterized in that** it comprises stopping means (54) cooperating with said sliding means (52) and said translation means (53) in order to clamp said welding head in the desired position.

17. Method for the formation of a metal mesh consisting of longitudinal wires (12) and transverse wires (13), by means of a welding head (15) comprising at least a feed unit (16) able to feed step-wise a plurality of said longitudinal wires (12), and a welding unit (17) by means of which said longitudinal wires (12) are fixed by welding to corresponding transverse wires (13), said welding unit (17) comprising two electrodes (19,20) selectively movable between a first feed position, in which at least a first electrode (19) is distant from said transverse (13) and longitudinal (12) wires, and a second welding position, in which both the electrodes (19,20) contact and grip said wires (12,13) and apply different tensions in order to weld said wires (12,13) to each other, **characterized in that** it comprises at least a first step in which a movement member (22) of the fluid-dynamic type, operatively associated at least with the first electrode (19), is moved between said first position to a second position near but not in contact with said wires (12, 13), according to information detected by a first position sensor (25) associated with said movement member (22) and configured to detect the position of the first electrode (19) with respect to the two wires (12,13), a second step in which, after having reached said position near to the wires (12, 13), a reduction of speed of the movement member (22) is determined by means of a reduction of a flow rate of the fluid through a delivery pipe (32) managed by an electro-valve (35), and a third step in which the first electrode (19) is brought in contact with said wires (12, 13) with a pressure detected by second pressure sensor (30) associated with the movement member (22) and configured to detect the working pressure of the first electrode (19) until a pre-determined threshold is reached and to cause the stoppage of the movement member (22) by said electro-valve (35), which is electronically connected both to the first position sensor (25) and also to the second and third position sensors (30, 31), and to cause the activation of a tension generator unit (21) to carry out the welding.

18. Machine for the formation of a metal mesh comprising a welding head as in claim 1.

## Patentansprüche

1. Schweißkopf zum Ausbilden eines Metallgitters, welches Longitudinaldrähte (12) und Transversaldrähte (13) aufweist, zumindest eine Zuführungseinheit (16), welche in der Lage ist, eine Mehrzahl der besagten Longitudinaldrähte (12) schrittweise zuzuführen, und eine Schweißeinheit (17) aufweisend, mittels welcher die besagten Longitudinaldrähte (12) an korrespondierende Transversaldrähte (13) geschweißt werden, wobei die besagte Schweißeinheit (17) zumindest zwei Elektroden (19, 20) aufweist, welche zwischen einer ersten Zuführungsposition, in welcher zumindest eine erste Elektrode (19) von den besagten Transversal- und Longitudinaldrähten (12, 13) im Abstand ist, und einer zweiten Schweißposition selektiv bewegbar ist, wobei beide Elektroden (19, 20) die besagten Drähte (12, 13) kontaktieren und greifen und verschiedene Spannungen aufbringen, um die besagten Drähte (12, 13) miteinander zu verschweißen, wobei der Schweißkopf zumindest ein Bewegungselement (22) aufweist, welches zumindest mit der ersten Elektrode (19) funktionell assoziiert ist, um diese zwischen der besagten ersten und der besagten zweiten Position zu bewegen, und wobei das besagte Bewegungselement (22) vom fluiddynamischen Typ ist, **dadurch gekennzeichnet, dass** der Schweißkopf weiter einen ersten Positionssensor (25), welcher mit dem besagten Bewegungselement (22) assoziiert ist und eingerichtet ist, um die Position der ersten Elektrode (19) bezüglich der zwei Drähte (12, 13) zu erfassen und um eine Reduktion der Bewegungsgeschwindigkeit der besagten ersten Elektrode (19) mittels einer Reduktion einer Strömungsrate des Fluids durch eine Zuführleitung (32) zu bedingen, was durch ein Elektroventil (35) erfolgt, wenn sich die besagte erste Elektrode (19) in einer Position nahe der besagten Drähte (12, 13) befindet, und einen zweiten und einen dritten Drucksensor (30, 31) aufweist, welche mit dem Bewegungsmittel (22) assoziiert sind und eingerichtet sind, um den Arbeitsdruck der ersten Elektrode (19) zu erfassen, wenn die erste Elektrode (19) die besagten Drähte (12, 13) kontaktiert, und um durch das besagte Elektroventil (35) das Stoppen zu bedingen, welches elektronisch mit sowohl dem ersten Positionssensor (25) und auch mit dem zweiten und dem dritten Drucksensor (30, 31) des Bewegungselements (22) verbunden ist, wenn ein vorbestimmter Schwellendruck erreicht ist, und um das Aktivieren einer Spannungserzeugungseinheit (21) zu bedingen, um das Schweißen auszuführen.

2. Schweißkopf gemäß Anspruch 1, **dadurch gekennzeichnet, dass** das besagte erste Sensormittel zumindest ein Lineartransduktionsmittel (25) des elektromagnetischen Typs aufweist, welches zumindest ein mit der ersten Elektrode mobiles magnetisches Element (26) aufweist, welches in der Lage ist, ein jeweiliges Magnetfeld zu emittieren.

3. Schweißkopf gemäß Anspruch 2, **dadurch gekennzeichnet, dass** das Lineartransduktionsmittel (25) ein bezüglich der besagten ersten Elektrode (19) fixiertes elektronisches Messmittel (29) aufweist, welches in der Lage ist, die Intensität des Magnetfelds des besagten magnetischen Elements (26) zu erfassen.

4. Schweißkopf gemäß Anspruch 1, **dadurch gekennzeichnet, dass** der besagte zweite Drucksensor zumindest einen ersten Druckschalter (30) aufweist, welcher in der Lage ist, den Druck beim Zuführen eines Fluids zu erfassen, welches das Bewegungselement (22) betätigt, und dass das dritte Drucksensormittel zumindest einen zweiten Druckschalter (31) aufweist, welcher in der Lage ist, den Druck des besagten Fluids zu erfassen, das vom Bewegungselement (22) zurückkehrt.

5. Schweißkopf gemäß Anspruch 1, **dadurch gekennzeichnet, dass** der besagte erste Positionssensor (25) und der besagte zweite und dritte Drucksensor (30, 31) mit dem besagten Bewegungselement (22) in einem einzelnen Körper integriert sind.

6. Schweißkopf gemäß Anspruch 1, **dadurch gekennzeichnet, dass** dieser eine Positionier- und Zentriereinheit (18) des Longitudinaldrahts (12) bezüglich der Zuführungsachse (X) des Longitudinaldrahts (12) aufweist.

7. Schweißkopf gemäß Anspruch 6, **dadurch gekennzeichnet, dass** die besagte Positioniereinheit (18) zumindest zwei Positionierführungen (37, 39) aufweist, welche im Wesentlichen bezüglich der Zuführungsachse des Longitudinaldrahts (12) zueinander versetzt und ausgerichtet sind.

8. Schweißkopf gemäß Anspruch 7, **dadurch gekennzeichnet, dass** bei Verwendung die besagten zumindest zwei Positionierungsführungen (37, 39) eine oberhalb und eine unterhalb des Longitudinaldrahts (12) angeordnet ist.

9. Schweißkopf gemäß Anspruch 7, **dadurch gekennzeichnet, dass** die besagten zumindest zwei Positionierungsführungen (37, 39) einen als ein V-angepassten Führungssitz (40) aufweisen, welcher in Richtung zur Zuführungsachse (X) offen ist.

10. Schweißkopf gemäß Anspruch 7, **dadurch gekennzeichnet, dass** dieser mit zumindest einer der zwei besagten Positionierungsführungen (39) assoziierte elastische Mittel (42) aufweist, welche in der Lage sind, den jeweiligen Führungssitz (40) der Positionierungsführung (39) bezüglich des zugeführten Longitudinaldrahts (12) zu zentrieren.

11. Schweißkopf gemäß Anspruch 1, **dadurch gekennzeichnet, dass** die Zuführungseinheit (16) zumindest ein Paar von Zuführrollen (43, 45) aufweist, welche in der Lage sind, um von entgegengesetzten Seiten am Longitudinaldraht (12) zu kooperieren, um diesen in Richtung zur Schweißeinheit (17) zuzuführen.

12. Schweißkopf gemäß Anspruch 1, **dadurch gekennzeichnet, dass** dieser ein Führungsmittel (47) aufweist, welches in der Lage ist, um selektiv mit einem vorauslaufenden Ende des jeweiligen Longitudinaldrahts (12) zu kooperieren, um dieses zu führen.

13. Schweißkopf gemäß Anspruch 11, **dadurch gekennzeichnet, dass** zumindest eine Rolle (45) des besagten Paars von Zuführrollen (43, 45) selektiv in Richtung zum Longitudinaldraht (12) bewegbar ist, welcher zugeführt werden soll, um es der Distanz der zwei Rollen (43, 45) zu erlauben, gemäß dem Durchmesser des Longitudinaldrahts (12) reguliert zu werden.

14. Schweißkopf gemäß Anspruch 13, **dadurch gekennzeichnet, dass** die Bewegung der bewegbaren Rolle (45) unter Verwendung eines Zylinders mit einer ovalen Kammer (46a) ausgeführt ist.

15. Schweißkopf gemäß Anspruch 1, **dadurch gekennzeichnet, dass** dieser Verschiebemittel (52) und Translationsmittel (53) aufweist, welche in der Lage sind, den besagten Schweißkopf lateral und in einer unabhängigen Art bezüglich eines Stützgestells des besagten Schweißkopfs zu versetzen.

16. Schweißkopf gemäß Anspruch 15, **dadurch gekennzeichnet, dass** dieser ein Stoppmittel (54) aufweist, welches mit den besagten Verschiebemittel (52) und den besagten Translationsmittel (53) kooperiert, um den besagten Schweißkopf in der gewünschten Position zu klemmen.

17. Verfahren zum Ausbilden eines Metallgitters, welches aus Longitudinaldrähten (12) und Transversaldrähten (13) besteht, mittels eines Schweißkopfs (15), welcher zumindest eine Zuführungseinheit (16), welche in der Lage ist, eine Mehrzahl der besagten Longitudinaldrähte (12) schrittweise zuzuführen, und eine Schweißeinheit (17) aufweist, mittels welcher die besagten Longitudinaldrähte (12) durch Schweißen an korrespondierenden Transversaldrähten (13) fixiert werden, wobei die besagte Schweißeinheit (17) zwei Elektroden (19, 20) aufweist, welche zwischen einer ersten Zuführungsposition, in welcher zumindest eine erste Elektrode (19) von den besagten Transversal- und Longitudinaldrähten (12, 13) im Abstand ist, und einer zweiten Schweißposition selektiv bewegbar ist, in welcher beide Elektroden (19, 20) die besagten Drähte (12, 13) kontaktieren und greifen und verschiedene Spannungen aufbringen, um die besagten Drähte (12, 13) miteinander zu verschweißen, **dadurch gekennzeichnet, dass** dieses zumindest einen ersten Schritt, in welchem ein Bewegungselement (22) des fluiddynamischen Typs, das mit zumindest der ersten Elektrode (19) funktional assoziiert ist, zwischen der besagten ersten Position zu einer zweiten Position nahe aber nicht in Kontakt mit den besagten Drähten (12, 13) gemäß einer Information bewegt wird, welche durch einen ersten Positionssensor (25) erfasst wird, der mit dem besagten Bewegungselement (22) assoziiert und eingerichtet ist, um die Position der ersten Elektrode (19) bezüglich der zwei Drähte (12, 13) zu erfassen, einen zweiten Schritt, in welchem, nachdem die besagte Position nahe der Drähte (12, 13) erreicht worden ist, eine Geschwindigkeitsreduktion des Bewegungselements (22) mittels einer Reduktion einer Strömungsrate des Fluids durch eine Zuführleitung (32) festgelegt wird, was durch ein Elektroventil (35) erfolgt, und einen dritten Schritt aufweist, in welchem die erste Elektrode (19) mit den besagten Drähten (12, 13) mit einem Druck in Kontakt gebracht wird, welcher durch einen zweiten Drucksensor (30) erfasst wird, der mit dem zweiten Bewegungselement (22) assoziiert und eingerichtet ist, um den Arbeitsdruck der ersten Elektrode (19) zu erfassen, bis eine vorbestimmte Schwelle erreicht ist, und um das Stoppen des Bewegungselements (22) durch das besagte Elektroventil (35) zu bedingen, welches elektronisch sowohl mit dem ersten Positionssensor (25) und auch mit dem zweiten und dem dritten Positionssensor (30, 31) verbunden ist, und um das Aktivieren einer Spannungserzeugungseinheit (21) zu bedingen, um das Schweißen auszuführen.

18. Maschine zum Ausbilden eines Metallgitters, welche einen Schweißkopf gemäß Anspruch 1 aufweist.

## Revendications

1. Tête de soudage pour la formation d'un treillis métallique comprenant des fils longitudinaux (12) et des fils transversaux (13), comprenant au moins une unité d'avance (16) capable de faire avancer pas à pas une pluralité desdits fils longitudinaux (12), et une unité de soudage (17) au moyen de laquelle lesdits fils longitudinaux (12) sont soudés aux fils transversaux (13) correspondants, ladite unité de soudage (17) comprenant au moins deux électrodes (19, 20) pouvant être déplacées de manière sélective entre une première position d'avance, dans laquelle au moins une première électrode (19) est éloignée desdits fils transversaux (13) et longitudinaux (12), et une deuxième position de soudage dans laquelle les deux électrodes (19, 20) sont en contact avec lesdits fils (12, 13) et les saisissent en appliquant des tensions différentes afin de souder lesdits fils (12, 13) les uns aux autres, dans laquelle la tête de soudage comprend au moins un élément de déplacement (22) associé de manière fonctionnelle au moins à la première électrode (19) afin de la déplacer entre ladite première et ladite deuxième positions, et dans laquelle ledit élément de déplacement (22) est de type fluido-dynamique, **caractérisée en ce que** la tête de soudage comprend également un premier capteur de position (25) associé audit élément de déplacement (22) est conçu pour détecter la position de la première électrode (19) par rapport aux deux fils (12, 13) et pour provoquer une réduction de la vitesse de déplacement de ladite première électrode (19), au moyen d'une réduction d'un débit du fluide à travers un tuyau d'alimentation (32) géré par une électrovanne (35), lorsque ladite première électrode (19) est dans une position proximale auxdits fils (12, 13), aussi bien qu'un deuxième et un troisième capteurs de pression (30, 31) associés à l'élément de déplacement (22), et conçus pour détecter la pression de travail de la première électrode (19) lorsque la première électrode (19) est en contact avec lesdits fils (12, 13) et pour provoquer l'arrêt de l'élément de déplacement (22), par ladite électrovanne (35), qui est en connexion électronique avec le premier capteur de position (25) et avec le deuxième et le troisième capteurs de pression (30, 31) de l'élément de déplacement (22) lorsqu'un seuil prédéterminé de pression est atteint, et pour provoquer l'actionnement d'un appareil générateur de tension (21) afin d'effectuer le soudage.

2. Tête de soudage selon la revendication 1, **caractérisée en ce que** ledit premier moyen capteur comprend au moins des moyens transducteurs linéaires (25) de type électromagnétique possédant au moins un élément magnétique (26), pouvant se déplacer avec la première électrode, et pouvant émettre en champ magnétique relatif.

3. Tête de soudage selon la revendication 2, **caractérisée en ce que** lesdits moyens transducteurs (25) comprennent des moyens électroniques de mesure (29), fixés par rapport à ladite première électrode (19), et pouvant détecter l'intensité du champ magnétique dudit élément magnétique (26).

4. Tête de soudage selon la revendication 1, **caractérisée en ce que** ledit deuxième capteur de pression comprend au moins un premier pressostat (30) capable de détecter la pression d'amenée d'un fluide qui actionne l'élément de déplacement (22), et le dit troisième moyen capteur de pression comprend au moins un deuxième pressostat (31) capable de détecter la pression dudit fluide de retour de l'élément de déplacement (22).

5. Tête de soudage selon la revendication 1, **caractérisée en ce que** ledit premier capteur de position (25) et lesdits deuxième et troisième capteurs de pression (30, 31) sont intégrés d'un seul tenant avec ledit élément de déplacement (22).

6. Tête de soudage selon la revendication 1, **caractérisée en ce qu'**elle comprend une unité de positionnement et de centrage (18) du fil longitudinal (12) par rapport à l'axe d'avance (X) du fil longitudinal (12).

7. Tête de soudage selon la revendication 6, **caractérisée en ce que** ladite unité de positionnement (18) comprend au moins deux guides de positionnement (37, 39), sensiblement alignés et décalés l'un par rapport à l'autre, selon l'axe d'avance du fil longitudinal (12).

8. Tête de soudage selon la revendication 7, **caractérisée en ce que**, lors de l'utilisation, lesdites au moins deux guides de positionnement (37, 39) sont situés l'un au-dessus et l'autre au-dessous du fil longitudinal (12).

9. Tête de soudage selon la revendication 7, **caractérisée en ce que** desdites au moins deux guides de positionnement (37, 39) possède un logement de guide (40) conformé en V avec l'ouverture vers l'axe d'avance (X).

10. Tête de soudage selon la revendication 7, **caractérisée en ce qu'**elle comprend des moyens élastiques (42) associés à au moins l'un desdits guides de positionnement (39), pouvant centrer le siège de guide respectif (40) du guide de positionnement (39) par rapport aux fil longitudinal (12) pendant son avance.

11. Tête de soudage selon la revendication 1, **caractérisée en ce que** ladite unité d'avance (16) comprend au moins deux rouleaux d'avance (43, 45) pouvant coopérer sur des côtés opposés avec le fil longitudinal (12) afin de le faire avancer vers l'unité de soudage (17).

12. Tête de soudage selon la revendication 1, **caractérisée en ce qu'**elle comprend des moyens d'assemblage bout à bout (47) pouvant coopérer sélectivement avec une extrémité d'attaque du fil longitudinal (12) relatif pour l'abouter.

13. Tête de soudage selon la revendication 11, **caractérisée en ce qu'**au moins un rouleau (45) desdits deux rouleaux d'avance (43, 45) peut être déplacé sélectivement vers le fil longitudinal (12) à faire avancer, afin de permettre l'ajustement de la distance entre les deux rouleaux (43, 45) suivant le diamètre du fil longitudinal (12).

14. Tête de soudage selon la revendication 13, **caractérisée en ce que** le déplacement du rouleau mobile (45) est effectué au moyen d'un cylindre avec une chambre ovale (46a).

15. Tête de soudage selon la revendication 1, **caractérisé en ce qu'**il comprend des moyens coulissants (52) et des moyens de translation (53), pouvant translater ladite tête de soudage latéralement et de façon indépendante par rapport à un cadre de support de ladite tête de soudage.

16. Tête de soudage selon la revendication 15, **caractérisée en ce qu'**elle comprend des moyens d'arrêt (54) coopérant avec lesdits moyens coulissants (52) et lesdits moyens de translation (53), afin de serrer ladite tête de soudage dans la position souhaitée.

17. Procédé de formation d'un treillis métallique constitué de fils longitudinaux (12) et des fils transversaux (13), au moyen d'une tête de soudage (15) comprenant au moins une unité d'avance (16) capable de faire avancer pas à pas une pluralité desdits fils longitudinaux (12), et une unité de soudage (17) au moyen de laquelle lesdits fils longitudinaux (12) sont fixés par soudage aux fils transversaux (13) correspondants, ladite unité de soudage (17) comprenant deux électrodes (19, 20) pouvant être déplacées de manière sélective entre une première position d'avance, dans laquelle au moins une première électrode (19) est éloignée desdits fils transversaux (13) et longitudinaux (12), et une deuxième position de soudage dans laquelle les deux électrodes (19, 20) sont en contact avec lesdits fils (12, 13) et les saisissent en appliquant des tensions différentes afin de souder lesdits fils (12, 13) les uns aux autres, **caractérisé en ce qu'**il comporte au moins une première étape dans laquelle un élément de déplacement (22) de type fluido-dynamique, associé de manière fonctionnelle au moins à la première électrode (19) est déplacé entre ladite première position et une deuxième position proximale mais pas en contact avec lesdits fils (12, 13), suivant les informations détectées par un premier capteur de position (25) associé audit élément de déplacement (22) est conçu pour détecter la position de la première électrode (19) par rapport aux deux fils (12, 13), une deuxième étape dans laquelle, une fois que ladite position proximale aux fils (12, 13) est atteinte, une réduction de la vitesse de l'élément de déplacement (22) est provoquée par une réduction d'un débit du fluide à travers un tuyau d'alimentation (32) géré par une électrovanne (35), et une troisième étape dans laquelle la première électrode (19) est amenée en contact avec lesdits fils (12, 13) avec une pression détectée par le deuxième capteur de pression (30) associé à l'élément de déplacement (22) est conçu pour détecter la pression de travail de la première électrode (19) jusqu'à l'atteinte d'un seuil prédéterminé, et pour provoquer l'arrêt de l'élément de déplacement (22) par ladite électrovanne (35), qui est en connexion électronique avec le premier capteur de position (25) et avec le deuxième et le troisième capteurs de position (30, 31), et pour provoquer l'actionnement d'un appareil générateur de tension (21) afin d'effectuer le soudage.

18. Machine pour la formation d'un treillis métallique comprenant une tête de soudage selon la revendication 1.
